# EUROPEAN PATENT APPLICATION

(11) **EP 4 404 306 A1**
(43) Date of publication of application: **24.07.2024**
(21) Application number: 22911919.3
(22) Date of filing: 21.12.2022
(51) Int. Cl.: H01M 4/62, H01M 4/139, H01M 4/13, H01M 10/052, C01B 32/174, H01M 4/02

(54) **CONDUCTIVE MATERIAL DISPERSION, AND ELECTRODE AND LITHIUM SECONDARY BATTERY PRODUCED USING SAME**

(30) Priority: 22.12.2021 KR 20210185164
(71) Applicant: LG Energy Solution, Ltd., Seoul 07335 (KR)
(72) Inventor: KIM, Ju Ryoun, Daejeon 34122 (KR); YANG, Jeong Min, Daejeon 34122 (KR); KIM, Woo Ha, Daejeon 34122 (KR); YOON, Sung Soo, Daejeon 34122 (KR)
(74) Representative: Hoffmann Eitle
(86) International application number: PCT/KR2022/020949
(87) International publication number: WO 2023/121286

(57) **Abstract**

The present invention discloses a conductive material dispersion, an electrode and a secondary battery prepared using the conductive material dispersion, wherein the conductive material dispersion may include a carbon-based conductive material, a main dispersant, an auxiliary dispersant, and a non-aqueous solvent, the main dispersant may include a hydrogenated nitrile-based copolymer having a weight average molecular weight of 5,000 to 100,000, and the auxiliary dispersant may include a compound containing methylcellulose as a main chain.

## Description

### TECHNICAL FIELD

### Cross-reference to Related Applications

This application claims the benefit of Korean Patent Application No. 10-2021-0185164, filed on December 22, 2021, the disclosures of which are incorporated herein in their entireties by reference.

### Technical Field

The present disclosure relates to a conductive material dispersion including a carbon-based conductive material, a main dispersant, an auxiliary dispersant, and a non-aqueous solvent, wherein the main dispersant includes a hydrogenated nitrile-based copolymer having a weight average molecular weight of 5,000 to 100,000, and the auxiliary dispersant includes a compound containing methylcellulose as a main chain, and an electrode and a lithium secondary battery prepared using the same.

### BACKGROUND ART

Secondary batteries are batteries which may be repeatedly used through a discharging process in which chemical energy is converted into electrical energy and a reverse charging process. The secondary batteries include a positive electrode, a negative electrode, an electrolyte, and a separator, and in general, the positive electrode and the negative electrode include an electrode current collector and an electrode active material layer formed on the electrode current collector. An electrode slurry composition including an electrode active material, a conductive material, a binder, and the like is applied onto an electrode current collector, dried, and then roll pressed to prepare the electrode active material layer.

Although various materials may be used as the conductive material, carbon black or carbon nanotubes are mainly used. When the conductive material in the form of powder is added to the electrode slurry, the conductive material is not uniformly dispersed, leading to degradation in conductivity of the prepared electrode. Accordingly, a method of mixing the conductive material with a dispersant and a dispersion medium to prepare a conductive material dispersion, and then applying the conductive material dispersion to an electrode slurry is used. As the dispersant, PVP or hydrogenated nitrile butadiene rubber may be used.

However, the conductive material dispersion using PVP or hydrogenated nitrile butadiene rubber alone exhibits a sharp increase in viscosity with a greater amount of the conductive material, and thus there is a limit to increasing the amount of the conductive material, leading to a limited improvement in productivity of the conductive material dispersion. Specifically, when the conductive material is not provided in a greater amount, an increase in solid content of the positive electrode slurry may not be available, resulting in degradation in processability. In addition, in a drying process when preparing a positive electrode active material layer, the positive electrode active material layer may be non-uniformly formed.

To make sure that the issue described above is prevented, a method of mixing a conductive material and a dispersant through various methods such as a jet mill, a high pressure homogenizer and increasing process time has been used. However, this method leads to rising process costs and process time. Moreover, as for a conductive material dispersion using PVP or hydrogenated nitrile butadiene rubber alone, there is a limit to reducing a particle size of the conductive material even with the changes in process conditions as described above.

### DISCLOSURE OF THE INVENTION

### TECHNICAL PROBLEM

One or more aspects of the present invention provide a conductive material dispersion having improved dispersibility of a conductive material and low viscosity.

One or more aspects of the present invention provide an electrode and a secondary battery prepared using the conductive material dispersion.

### TECHNICAL SOLUTION

According to one or more embodiments of the present invention, provided is a conductive material dispersion including a carbon-based conductive material, a main dispersant, an auxiliary dispersant, and a non-aqueous solvent, wherein the main dispersant includes a hydrogenated nitrile-based copolymer having a weight average molecular weight of 5,000 to 100,000, and the auxiliary dispersant includes a compound containing methylcellulose as a main chain.

According to one or more embodiments of the present invention, provided is an electrode including an electrode active material layer formed from an electrode slurry composition, wherein the electrode slurry composition comprises an electrode active material, the conductive material dispersion of one or more embodiments, a binder, and a solvent.

According to one or more embodiments of the present invention, provided is a secondary battery including a positive electrode. In this case, the positive electrode may be the electrode of an embodiment above.

### ADVANTAGEOUS EFFECTS

A conductive material dispersion according to one or more embodiments of the present invention includes a hydrogenated nitrile-based copolymer having a weight average molecular weight of 5,000 to 100,000 as a main dispersant, a compound containing methylcellulose as a main chain as an auxiliary dispersant, and a non-aqueous solvent. As the hydrogenated nitrile-based copolymer having a weight average molecular weight of 5,000 to 100,000 is used as a main dispersant, the hydrogenated nitrile-based copolymer may effectively penetrate between carbon-based conductive materials. Accordingly, in the carbon-based conductive material, wetting through the non-aqueous solvent may work well, and the carbon-based conductive material may be uniformly dispersed to reduce particle size. When the compound containing methylcellulose as a main chain is used as an auxiliary dispersant, the state of dispersion is effectively maintained, and the non-aqueous solvent and the carbon-based conductive material may be additionally dispersed.

Accordingly, the carbon-based conductive material has improved dispersibility in the conductive material dispersion, and accordingly, the conductive material may have a low particle size, and the conductive material dispersion may have low viscosity. Accordingly, even when the positive electrode slurry has a high solid content, the coating and drying processes of the positive electrode slurry may be uniformly performed, and cracking of the positive electrode active material upon roll pressing may be reduced, gas generation in batteries at high temperature and positive electrode resistance may be reduced, and life characteristics may be improved.

### DETAILED DESCRIPTION

It will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

As used herein, the terms "include," "comprise," or "have" specify the presence of stated features, numbers, steps, elements, or combinations thereof, but do not preclude the presence or addition of one or more other features, numbers, steps, elements, or combinations thereof.

As used herein, a "specific surface area" is measured through a BET method, and specifically may be calculated from an amount of nitrogen gas adsorbed at a liquid nitrogen temperature (77 K) using BELSORP-mino II from BEL JAPAN, INC.

As used herein, D₅₀ and D₉₀ may be defined as a particle diameter at a cumulative volume of 50% and 90% respectively in a particle size distribution curve of particles. D₅₀ and D₉₀, for example, may be measured by using a laser diffraction method. The laser diffraction method generally allows the measurement of a particle diameter ranging from a submicron level to a few mm and may produce highly repeatable and high-resolution results.

As used herein, a "weight average molecular weight (Mw)" refers to a conversion value with respect to standard polystyrene measured through gel permeation chromatography (GPC). Specifically, the weight average molecular weight is a value converted from a value measured under the following conditions using GPC, and standard polystyrene of an Agilent system is used to make a calibration curve.

### <Measurement Conditions>

Measuring instrument: Agilent GPC (Agilent 1200 series, US)
Column: Two PL Mixed B connections
Column temperature: 40 °C
Eluent: Tetrahydrofuran
Flow rate 1.0 mL/min
Concentration: ~ 1mg/mL (100µL injection)

As used herein, BD weight and HBD weight for calculating residual double bond values may be determined through a method of 1H HR-MAS NMR. Agilent 600 MHz HR-MAS NMR and Bruker 600 MHz NMR may be used as measuring instruments. Specifically, a trace amount of a dried hydrogenated nitrile-based copolymer sample is put into an HR-MAS rotor, poured into trichlorethylene (TCE) to be subjected to swelling, and subjected to sampling, and then 1H HR-MAS NMR experiments may be performed (conditions of zg45, ns=32, d1=5s, room temperature). Alternatively, about 5 mg of a dried hydrogenated nitrile copolymer sample was dissolved in about 0.5 ml of deuterated chloroform (CDCl₃), and then subjected to sampling to perform solution NMR (conditions of 1H-13C HSQC NMR, room temperature). Through the measuring method described above, the BD weight and the HBD weight may be measured by determining NMR peaks.

Hereinafter, the present invention will be described in detail.

### <Conductive material dispersion>

A conductive material dispersion according to one or more embodiments of the present invention may include a carbon-based conductive material, a main dispersant, an auxiliary dispersant, and a non-aqueous solvent, the main dispersant may include a hydrogenated nitrile-based copolymer having a weight average molecular weight of 5,000 to 100,000, and the auxiliary dispersant may include a compound containing methylcellulose as a main chain.

The conductive material dispersion may be a conductive material dispersion for forming an electrode, and specifically, a conductive material dispersion for forming a positive electrode.

### (1) Carbon-based conductive material

The carbon-based conductive material may include carbon nanotubes.

In the carbon nanotubes, a graphite sheet in the form of a cylinder having a nano-sized diameter and having a sp2 bonding structure exhibits conductor or semiconductor properties depending on the angle and structure at which the graphite sheet is rolled. The carbon nanotubes may be classified into single-walled carbon nanotubes (SWCNT), double-walled carbon nanotubes (DWCNT), and multi-walled carbon nanotubes (MWCNT) depending on the number of bonds forming a wall. More specifically, the carbon nanotubes may be multi-walled carbon nanotubes.

The carbon nanotubes may have a D₅₀ of 2 um to 4 um, specifically 2.5 um to 3.5 um. The carbon nanotubes may have a D₉₀ of 5 um to 10 um, specifically 6 um to 9 µm. Satisfying the above range indicates that bundle-type carbon nanotubes used as a raw material are effectively dispersed in the conductive material dispersion, and thus, electrode and battery resistance is effectively improved.

The conductive material dispersion may include the carbon nanotubes in an amount of 3 wt% to 8 wt%, specifically, 3 wt% to 7 wt%. When the above range is satisfied, high productivity is maintained and an electrode slurry is easily transferred and added. In addition, since the solid content of the prepared electrode slurry is not excessively reduced, binder migration upon electrode drying may be prevented. Accordingly, electrode adhesion may be improved, and the electrode active material layer may be effectively packed to prepare an electrode having a low thickness.

In some cases, the carbon-based conductive material may further include carbon black along with carbon nanotubes.

### (2) Dispersant

The conductive material dispersion according to the present embodiment includes at least two or more dispersants. Specifically, the dispersant may include a main dispersant and an auxiliary dispersant.

### 1) Main dispersant

The main dispersant serves to improve the dispersibility of the carbon-based conductive material in the conductive material dispersion, and may be a hydrogenated nitrile-based copolymer. The hydrogenated nitrile-based copolymer may be a copolymer including an α,β-unsaturated nitrile-derived structure unit and a hydrogenated conjugated diene-derived structure unit, or a copolymer including an α,β-unsaturated nitrile-derived structure unit, a conjugated diene-derived structure unit, and a hydrogenated conjugated diene-derived structure unit. Specifically, the hydrogenated nitrile-based copolymer may be a hydrogenated nitrile-based copolymer in which a conjugated diene-derived structure unit is entirely hydrogenated, so that the conjugated diene-derived structure unit is not included, or a partially hydrogenated nitrile-based copolymer in which the conjugated diene-derived structure unit is partially hydrogenated, so that the hydrogenated conjugated diene-derived structure unit is included along with the conjugated diene-derived structure unit.

The hydrogenated nitrile-based copolymer may be hydrogenated nitrile-butadiene rubber, specifically hydrogenated acrylonitrile-butadiene rubber, more specifically, partially hydrogenated acrylonitrile-butadiene rubber.

A method for subjecting the conjugated diene to hydrogenation may be performed by a hydrogenation method known in the art, for example, by a catalytic hydrogenation reaction using a catalyst system such as Rh, Ru, Pd, and IR, and the hydrogenation rate may be controlled by adjusting the amount of catalyst, reaction hydrogen pressure, reaction time, and the like.

The hydrogenated nitrile-based copolymer may be prepared by copolymerizing an α,β-unsaturated nitrile monomer and a conjugated diene-based monomer, and then hydrogenating a C=C double bond in the copolymer. The polymerization reaction and hydrogenation process of the monomers may be performed according to a typical method known in the art.

As the α,β-unsaturated nitrile monomer, for example, acrylonitrile or methacrylonitrile may be used, and any one thereof or a mixture of two or more thereof may be used. As the conjugated diene-based monomer, for example, conjugated diene-based monomers having 4 to 6 carbon atoms such as 1,3-butadiene, isoprene, or 2,3-methyl butadiene may be used, and any one thereof or a mixture of two or more thereof may be used.

The hydrogenated nitrile-based copolymer may include the α,β-unsaturated nitrile-derived structure unit in an amount of 20 wt% to 50 wt%, specifically 30 wt% to 40 wt%. When the above-described range is satisfied, affinity between the hydrogenated nitrile-based copolymer and a non-aqueous solvent is at an appropriate level, and accordingly, the carbon-based conductive material may be more easily dispersed in the conductive material dispersion. Accordingly, the prepared electrode may have further improved conductivity, reduced battery resistance, and increased battery lifetime.

According to Equation 1 below, the hydrogenated nitrile-based copolymer may have a residual double bond value of 0.3 wt% or less (0 wt% to 3 wt%), specifically 0.01 wt% to 0.3 wt%, more specifically 0.1 wt% to 0.3 wt%, for example, 0.1 wt% to 0.25 wt%. Residual double bond (wt%) = BD weight/(BD weight + HBD weight) × 100

In Equation 1 above, the BD weight is a weight of the conjugated diene-derived structure unit in the hydrogenated nitrile-based copolymer, and the HBD weight is a weight of the hydrogenated conjugated diene-derived structure unit in the hydrogenated nitrile-based copolymer.

When the residual double bond value satisfies the above range, the conductive material dispersion and the electrode slurry may have improved process stability and battery life characteristics. In addition, this effect may be further improved through a combination with an auxiliary dispersant. The residual double bond value may be 0 wt%, but may be preferably 0.01 wt% or greater, given costs and yield according to technical levels.

According to an embodiment, the hydrogenated nitrile-based copolymer may include a unit (an α,β-unsaturated nitrile-derived structure unit) represented by Formula 1 below and a repeating unit (a hydrogenated conjugated diene-derived structure unite) represented by Formula 2 below, or may include a unit represented by Formula 1 below, a unit represented by Formula 2 below, and a unit (a conjugated diene-derived structure unit)represented by Formula 3 below.

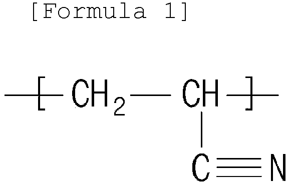

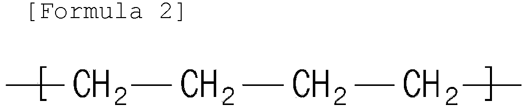

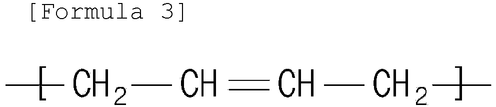

Meanwhile, the hydrogenated nitrile-based copolymer may have a weight average molecular weight of 5,000 to 100,000, specifically 20,000 to 40,000. When the weight average molecular weight of the hydrogenated nitrile-based copolymer is less than 5,000, the conductive material dispersion has excessively increased viscosity, and thus processability may be significantly degraded. In addition, when the weight average molecular weight of the hydrogenated nitrile-based copolymer is greater than 100,000, the conductive material is not dispersed well, resulting in poor conductivity of a prepared electrode. That is, in one or more embodiments of the present invention, the viscosity of the conductive material dispersion may be level, and the conductive material may be effectively dispersed as well.

The conductive material dispersion may include the hydrogenated nitrile-based copolymer in an amount of 5 parts by weight to 40 parts by weight, specifically 8 parts by weight to 30 parts by weight, more specifically 10 parts by weight to 20 parts by weight, with respect to 100 parts by weight of the carbon-based conductive material. When the above-described range is satisfied, the carbon-based conductive material may be dispersed well in the conductive material dispersion, and the prepared electrode may have improved energy density and reduced resistance.

### 2) Auxiliary dispersant

The auxiliary dispersant serves to improve the dispersibility of the conductive material by assisting the main dispersant, and is a compound containing methylcellulose as a main chain.

The compound including methylcellulose as a main chain has a bulky structure, and may thus maintain a dispersing effect by the main dispersant and may also generate an additional dispersing effect.

The compound including methylcellulose as a main chain may include at least one selected from the group consisting of carboxy methyl cellulose (CMC), ethyl methyl cellulose, hydroxypropyl cellulose, and hydroxyethyl cellulose. When the materials above are used, the above-described effect may be more well expressed.

The conductive material dispersion may include the compound including methylcellulose as a main chain in an amount of 5 parts by weight to 40 parts by weight, specifically 8 parts by weight to 30 parts by weight, more specifically 10 parts by weight to 20 parts by weight, with respect to 100 parts by weight of the carbon-based conductive material. When the above-described range is satisfied, the dispersing effect by the main dispersant may be more effectively maintained, and the additional dispersing effect may also be more effectively generated.

A weight ratio of the main dispersant and the auxiliary dispersant may be 40:60 to 90:10, specifically 40:60 to 80:20, more specifically 40:60 to 60:40. When the above-described range is satisfied, the carbon-based conductive material may be effectively dispersed by the main dispersant, re-aggregation of the carbon-based conductive material may be more effectively prevented, and the carbon-based conductive material may be more effectively dispersed additionally. Accordingly, a conductive material dispersion having both a very low particle size and viscosity of the carbon-based conductive material.

A total amount of the main dispersant and the auxiliary dispersant may be 5 parts by weight to 500 parts by weight, specifically 10 parts by weight to 100 parts by weight, more specifically 15 parts by weight to 45 parts by weight, with respect to 100 parts by weight of the carbon-based conductive material. When the above-described range is satisfied, the carbon-based conductive material may be effectively dispersed, and a ratio of an active material in an electrode may be increased to improve the energy density of the electrode.

### (3) Non-aqueous solvent

The non-aqueous solvent may be an organic solvent including any one thereof or two or more hetero atoms selected from the group consisting of a nitrogen atom (N) and an oxygen atom (O) having an unshared electron pair.

Specifically, the non-aqueous solvent may be an amide-based polar organic solvent such as dimethylformamide (DMF), diethylformamide, dimethylacetamide (DMAc), and N-methylpyrrolidone (NMP); an alcohol such as methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tert-butanol), pentanol, hexanol, heptanol, or octanol; a glycol such as ethylene glycol, diethylene glycol, triethylene glycol, propylene glycol, 1,3-propanediol, 1,3-butanediol, 1,5-pentanediol, or hexylene glycol; a polyhydric alcohol such as glycerin, trimethylol propane, pentaerythritol, or sorbitol; a glycol ether such as ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, or tetraethylene glycol monobutyl ether; a ketone such as acetone, methyl ethyl ketone, methyl propyl ketone, or cyclopentanone; and an ester such as ethyl acetate, γ-butyl lactone, and ε-propiactone, and any one thereof or a mixture of two or more thereof may be used. When considering the miscibility with an electrode slurry, N-methylpyrrolidone (NMP) is particularly preferable among the above.

In the conductive material dispersion, the solid content of the conductive material dispersion may be 1 wt% to 10 wt%, specifically 2 wt% to 8 wt%, more specifically 3.5 wt% to 5.5 wt%. When the above-described range is satisfied, the conductive material dispersion may maintain a low viscosity and the dispersion of the conductive material may be effectively performed. In this case, the solid content may indicate a carbon-based conductive material, a main dispersant, and an auxiliary dispersant included in the conductive material dispersion.

The conductive material dispersion of one or more embodiments of the present invention including the above components may be prepared by mixing a carbon-based conductive material, a main dispersant, an auxiliary dispersant, and a non-aqueous solvent. In this case, the mixing may be performed by a typical mixing method, specifically, by using a mixing device such as a homogenizer, a beads mill, a ball mill, a basket mill, an attrition mill, an all-purpose stirrer, a clear mixer, a spike mill, a TK mixer, or the like, and the mixing order of each component is not particularly limited. That is, the conductive material dispersion according to one or more embodiments of the present invention may be prepared by adding a carbon-based conductive material to a non-aqueous solvent, and then adding a main dispersant and an auxiliary dispersant thereto, followed by mixing, prepared by first adding a main dispersant and an auxiliary dispersant to a non-aqueous solvent, and then mixing a carbon-based conductive material therewith, or prepared by adding a main dispersant, an auxiliary dispersant, and a carbon-based conductive material to a non-aqueous solvent, followed by mixing.

Meanwhile, in the above mixing process, cavitation dispersion processing may be performed in order to increase the dispersibility of the carbon-based conductive material. The cavitation dispersion processing is a dispersion processing method using shock waves generated by the rupture of vacuum bubbles formed in water when high energy is applied to a liquid, and when this method is used, dispersion may be achieved without damaging the properties of the carbon-based conductive material. Specifically, the cavitation dispersion processing may be performed by ultrasound, a jet mill, or a shear dispersion processing.

### Electrode

An electrode according to one or more embodiments of the present invention includes an electrode active material layer formed of an electrode slurry composition including an electrode active material, a conductive material dispersion, and a binder. Specifically, the electrode may include an electrode current collector and an electrode active material layer formed on the electrode current collector, and the electrode active material layer may be formed of an electrode slurry composition including an electrode active material, a conductive material dispersion, and a binder.

In this case, the conductive material dispersion is the above-described conductive material dispersion according to one or more embodiments of the present invention. Since descriptions of the conductive material dispersion are the same as provided above, detailed descriptions thereof will be omitted, and hereinafter, the other components will be described.

The electrode current collector is not particularly limited as long as it does not cause chemical changes in batteries and has conductivity. For example, copper, stainless steel, aluminum, nickel, titanium, alloys thereof, any of these surface-treated with carbon, nickel, titanium, or silver, calcined carbon, or the like may be used.

The electrode current collector may typically have a thickness of 3 um to 500 µm, and may have fine irregularities formed in a surface thereof to increase the adhesion of an electrode active material. In addition, the electrode current collector may be used in various forms such as a film, a sheet, a foil, a net, a porous body, a foam, and a non-woven fabric body.

Meanwhile, the electrode active material (a) included in the electrode active material layer may be a positive electrode active material or a negative electrode active material commonly used in the art, and types thereof are not particularly limited.

For example, the positive electrode active material may be a lithium oxide including lithium and one or more types of metals such as cobalt, manganese, nickel, and aluminum. More specifically, the lithium oxide may be a lithium-manganese-based oxide (e.g., LiMnO₂, LiMn₂O, etc.), a lithium-cobalt-based oxide (e.g., LiCoO₂, etc.), a lithium-nickel-based oxide (e.g., LiNiO₂, etc.), a lithium-nickel-manganese-based oxide (e_{.}g_{.}, LiNi_{1-Y1}Mn_{Y1}O₂ (where 0<Y1<1), LiNi_{Z1}Mn_{2-Z1}O₄ (where 0<Z1<2), etc.), a lithium-nickel-cobalt-based oxide (e.g., LiNi_{1-Y2}Co_{Y2}O₂ (where 0<Y2<1), etc.), a lithium-manganese-cobalt-based oxide (e.g., LiCo_{1-Y3}Mn_{Y3}O₂ (where 0<Y3<1), LiMn_{2-Z2}Co_{Z2}O₄ (where 0<Z2<2), etc.), a lithium-nickel-cobalt-manganese-based oxide (e.g., Li(Ni_{P1}Co_{Q1}Mn_{R1})O₂ (where 0<P1<1, 0<Q1<1, 0<R1<1, P1+Q1+R1=1) or Li(Ni_{P2}Co_{Q2}Mn_{R2})O₄ (where 0<P2<2, 0<Q2<2, 0<R2<2, P2+Q2+R2=2), etc.), or a lithium-nickel-cobalt-manganese-other metal (M) oxide (e.g., Li(Ni_{P3}Co_{Q3}Mn_{R3}M¹_{S})O₂ (where M¹ is selected from the group consisting of Al, Cu, Fe, V, Cr, Ti, Zr, Zn, Ta, Nb, Mg, N, W, and Mo, P3, Q3, R3, and S are respective atomic fraction of elements which are independent of one another, and 0<P3<1, 0<Q3<1, 0<R3<1, 0<S<1, P3+Q3+R3+S=1), etc.), which may be used alone or in combination of two or more thereof.

Meanwhile, the negative electrode active material may be, for example, a carbonaceous material such as artificial graphite, natural graphite, graphitized carbon fiber, or amorphous carbon; a metallic compound alloyable with lithium, such as Si, Al, Sn, Pb, Zn, Bi, In, Mg, Ga, Cd, a Si alloy, a Sn alloy, or an Al alloy; a metal oxide capable of doping and dedoping lithium, such as SiOᵥ(O<v<2), SnO₂, vanadium oxide, or lithium vanadium oxide; or a composite including the metallic compound and the carbonaceous material, such as a SiC composite or a Sn-C composite, which may be used alone or in combination of two or more thereof. In addition, as the negative electrode active material, a lithium metal thin film may be used. Additionally, as a carbon material, low-crystalline carbon, high-crystalline carbon, and the like may all be used.

The electrode active material may be included in an amount of 90 wt% to 99 wt%, preferably 95 wt% to 99 wt %, with respect to the total solid content in the electrode slurry composition. When the amount of the electrode active material satisfies the above-described range, excellent energy density, excellent adhesion to the electrode, and excellent electrical conductivity may be obtained.

The binder serves to ensure the adhesion between electrode active materials or the adhesion between the electrode active material and the collector, and any binder commonly used in the art may be used, and the type thereof is not particularly limited. The binder may be, for example, polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated-EPDM, styrene-butadiene rubber (SBR), fluororubber, various copolymers thereof, or the like, which may be used alone or in combination of two or more thereof.

The binder may be included in an amount of 5 wt% or less, preferably 1 wt% to 3 wt%, with respect to the total solid content in the electrode slurry composition. When the amount of the binder satisfies the above-described range, excellent adhesion to the electrode may be attained with a minimized increase in electrode resistance.

Meanwhile, the electrode slurry composition may further include a solvent, as necessary, to adjust viscosity. In this case, the solvent may be water, an organic solvent, or a mixture thereof. The organic solvent may be, for example, an amide-based polar organic solvent such as dimethylformamide (DMF), diethylformamide, dimethylacetamide (DMAc), or N-methyl pyrrolidone (NMP); an alcohol such as methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tert-butanol), pentanol, hexanol, heptanol, or octanol; a glycol such as ethylene glycol, diethylene glycol, triethylene glycol, propylene glycol, 1,3-propanediol, 1,3-butanediol, 1,5-pentanediol, or hexylene glycol; a polyhydric alcohol such as glycerin, trimethylolpropane, pentaerythritol, or sorbitol; a glycol ether such as ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, or tetraethylene glycol monobutyl ether; a ketone such as acetone, methyl ethyl ketone, methyl propyl ketone, or cyclopentanone; an ester such as ethyl acetate, γ-butyl lactone, or ε-propiolactone; or the like, which may be used alone or in combination of two or more thereof, but the present disclosure is not limited thereto.

The solvent may be included in an amount such that the solid content in the electrode slurry composition is 60 wt% to 85 wt%, preferably 65 wt% to 80 wt%. When the above-described range is satisfied, binder migration may be suppressed to increase adhesion to the electrode, drying temperature may be lowered to improve coating properties, and coating speed may be increased to improve productivity.

An electrode slurry composition containing the components described above is applied and dried to form an electrode active material layer, thereby preparing the electrode according to one or more embodiments of the present invention. Specifically, the electrode active material layer may be formed by applying an electrode slurry onto an electrode current collector and then drying the same or by applying an electrode slurry onto a separate support and then laminating a film separated from the support on the electrode current collector. As necessary, after the electrode active material layer is formed through the above-described method, a roll pressing process may be further performed. In this case, drying and roll pressing may be performed under appropriate conditions in consideration of physical properties of the electrode to be finally prepared, and the conditions are not particularly limited.

### Lithium secondary battery

A lithium secondary battery according to one or more embodiments of the present invention includes a positive electrode, and the positive electrode may be the above-described electrode of an embodiment. Specifically, the secondary battery according to one or more embodiments of the present invention may include a positive electrode, a negative electrode, a separator interposed between the positive electrode and the negative electrode, and an electrolyte, and, in this case, the positive electrode may be the above-described electrode of an embodiment.

Since descriptions of the electrode according to one or more embodiments of the present invention have been provided above, detailed descriptions thereof will be omitted, and hereinafter, the other components will be described.

The separator serves to separate the negative electrode and the positive electrode and provide a passage for lithium ion migration, and any separator commonly used in a lithium secondary battery may be used without particular limitation. Specifically, as the separator, a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a stacked structure having two or more layers thereof may be used. In addition, a typical porous non-woven fabric, for example, a non-woven fabric formed of glass fiber having a high melting point, polyethylene terephthalate fiber, or the like may be used. Furthermore, in order to ensure heat resistance or mechanical strength, a coated separator which includes a ceramic component or polymer material and is optionally in a single-layer or multi-layer structure may be used.

As the electrolyte, an organic liquid electrolyte, an inorganic liquid electrolyte, a solid polymer electrolyte, a gel-type polymer electrolyte, an inorganic solid electrolyte, a molten-type inorganic electrolyte, or the like that is usable in the manufacture of a lithium secondary battery may be used without particular limitation.

Specifically, the electrolyte may include a non-aqueous organic solvent and a metal salt.

As the non-aqueous organic solvent, for example, an aprotic organic solvent such as N-methyl-2-pyrrolidone, propylene carbonate, ethylene carbonate, butylene carbonate, dimethyl carbonate, diethyl carbonate, gamma-butyrolactone, 1,2-dimethoxyethane, tetrahydroxyfuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, dioxolane derivatives, sulfolane, methyl sulfolane, 1,3-dimethyl-2-imidazolidinone, propylene carbonate derivatives, tetrahydrofuran derivatives, ethers, methyl propionate, and ethyl propionate may be used.

Among the carbonate-based organic solvents, especially, ethylene carbonate and propylene carbonate, which are cyclic carbonates, are preferably used because they are high-viscosity organic solvents and have high permittivity, thereby satisfactorily dissociating a lithium salt. When such cyclic carbonates are mixed with a low-viscosity, low-permittivity linear carbonate, such as dimethyl carbonate and diethyl carbonate, in an appropriate ratio and used, an electrolyte having high electrical conductivity may be prepared, and therefore, such mixtures are more preferably used.

As the metal salt, a lithium salt may be used, and the lithium salt is a material which is easily dissolved in the non-aqueous electrolyte solution. For example, as an anion of the lithium salt, one or more selected from the group consisting of F-, Cl-, I-, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻ may be used.

In addition to the above-described electrolyte components, one or more types of additives such as a haloalkylene carbonate-based compound such as difluoroethylene carbonate, pyridine, triethylphosphite, triethanolamine, a cyclic ether, ethylenediamine, n-glyme, hexaphosphoric triamide, a nitrobenzene derivative, sulfur, a quinone imine dye, an N-substituted oxazolidinone, an N,N-substituted imidazolidine, an ethylene glycol dialkyl ether, an ammonium salt, pyrrole, 2-methoxyethanol, aluminum trichloride, or the like may be further included in the electrolyte for the purpose of enhancing the lifetime characteristics of batteries, suppressing a reduction in battery capacity, enhancing the discharge capacity of batteries, and the like.

Hereinafter, Examples of the present invention will be described in detail so that those skilled in the art may easily carry out the present invention. The present invention may, however, be embodied in many different forms, and is not limited to Examples set forth herein.

Specifications of each component used in the following Examples and Comparative Examples are as follows.

### (A) Main dispersant

Hydrogenated acrylonitrile-butadiene rubber (H-NBR) having the following physical properties was prepared.

**[Table 1]**

| Main dispersant | Mw (g/mol) | Residual double bond (RDB, wt%) | Acrylonitrile-derived unit amount (wt%) |
|---|---|---|---|
| (A1) | 35,000 | 0.2 | 34 |
| (A2) | 220,000 | 0.2 | 34 |

### (B) Auxiliary dispersant

An auxiliary dispersant having the following physical properties was prepared.
(B1): Carboxy methylcellulose
(B2): A copolymer of polyethylene glycol and styrene (a copolymer including an oxyalkylene unit and a styrene unit, Mw: 1,250 g/mol, oxyalkylene unit amount: 71.8 wt%, styrene unit amount: 28.2 wt%), The amount of each unit in the copolymers was measured through nuclear magnetic resonance (NMR) .

### (C) Carbon-based conductive material

(C1) Bundle-type multi-walled carbon nanotubes (CNT, manufacturer: LG CHEM) having a BET specific surface area of 185 m²/g were used.

### Examples 1 and 2 and Comparative Examples 1 to 4.

The main dispersant (A), the auxiliary dispersant (B), and the carbon-based conductive material (C) were added to N-methyl pyrrolidone to prepare a mixed solution and 30 kg of the mixed solution was mixed for 180 minutes using a mixer (BTM-50, disper 1000 rpm/anchor 100 rpm). The mixed mixture was stirred for 10 minutes using a NETZSCH bead mill (NETZSCH LMZ2, bead size: 0.65 mm/2500 rpm) to obtain a conductive material dispersion.

**[Table 2]**

| Conductive material dispersion | Main dispersant | | Auxiliary dispersant | | Carbon-based conductive material | | Conductive material dispersion solid content (wt%) |
|---|---|---|---|---|---|---|---|
| | Type | Amount (parts by weight) | Type | Amount (parts by weight) | Type | Amount (parts by weight) | |
| Example 1 | (A1) | 15 | (B1) | 15 | (C1) | 100 | 4.5 |
| Example 2 | (A1) | 22.5 | (B1) | 7.5 | (C1) | 100 | 4.5 |
| Comparative Example 1 | (A2) | 15 | (B1) | 15 | (C1) | 100 | 4.5 |
| Comparative Example 2 | (A1) | 22.5 | (B2) | 7.5 | (C1) | 100 | 4.5 |
| Comparative Example 3 | (A1) | 30 | - | - | (C1) | 100 | 4.5 |
| Comparative Example 4 | (A2) | 30 | - | - | (C1) | 100 | 4.5 |

### Experimental Example 1: Particle size analysis

The particle sizes of each of the conductive material dispersions of Examples and Comparative Examples were analyzed through laser diffraction and are shown in Table 3. Specifically, the conductive material dispersion was dispersed in a solvent, and then introduced into a laser diffraction particle size measuring instrument (Malvern, Mastersizer 3000) to measure a diffraction pattern difference according to the particle size when particles passed through a laser beam so as to calculate particle size distribution. D₅₀ and D₉₀ were measured by determining a particle diameter at the point where the volume cumulative distribution according to the particle diameter was 50% and 90% respectively.

### Experimental Example 2: Viscosity analysis (immediately after preparation of conductive material dispersion)

The viscosity of the conductive material dispersions prepared in Examples and Comparative Examples was measured at 23 °C and 12 rpm using a viscometer (Brookfield Co., viscometer DV2T, LV), and is shown in Table 3.

### Experimental Example 3: Determination of viscosity increase upon long-term storage.

For the conductive material dispersions prepared in Examples and Comparative Examples, the viscosity increase rate (%) according to Equation below was determined.

Viscosity increase rate (%) = {(Viscosity of conductive material dispersion measured after storage at 25 °C for 4 weeks - Viscosity of conductive material dispersion immediately after preparation)/ Viscosity of conductive material dispersion immediately after preparation} × 100

**[Table 3]**

| Conductive material dispersion | Particle size | | Viscosity (cp) | Viscosity increase rate (%) |
|---|---|---|---|---|
| | D₅₀ (µm) | D₉₀ (µm) | | |
| Example 1 | 2.89 | 6.33 | 4,570 | 10 |
| Example 2 | 3.24 | 7.48 | 6, 920 | 15 |
| Comparative Example 1 | 5.12 | 12.4 | 24,100 | 27 |
| Comparative Example 2 | 3.37 | 7.5 | 8,340 | 12 |
| Comparative Example 3 | 3.58 | 7.93 | 11,780 | 36 |
| Comparative Example 4 | 4.97 | 12.8 | 30,200 | 17 |

In Examples 1 and 2, the particle size of carbon nanotubes was determined to be low, indicating that the carbon nanotubes were dispersed well. In addition, in Examples 1 and 2, it is seen that the viscosity and viscosity increase rate of the conductive material dispersion are low.

Meanwhile, in Comparative Examples 1 to 4, the particle size of carbon nanotubes is higher than that of Examples 1 and 2, indicating that the carbon nanotubes are relatively less dispersed. In addition, in Comparative Examples 1 to 4, it is seen that the viscosity of the conductive material dispersion is excessively high, and in particular, in Comparative Examples 1 and 3, the viscosity increase rate is also too high.

In addition, comparing Comparative Example 1 and Comparative Example 4, it is seen that when a weight average molecular weight of the hydrogenated nitrile-based copolymer used as a main dispersant is not 5,000 to 100,000, there is no improvement even when a compound containing methylcellulose as a main chain is used as an auxiliary dispersant. Specifically, in Comparative Example 1 (using main dispersant: (A2) and auxiliary dispersant: (B1) used), compared to Comparative Example 4 (using main dispersant: (A2) and no use of auxiliary dispersant), it is seen that the D₅₀ of carbon nanotubes is high, so the dispersion is less performed, the viscosity is still very high, and the viscosity increase rate is rather higher.

## Claims

1. A conductive material dispersion comprising a carbon-based conductive material, a main dispersant, an auxiliary dispersant, and a non-aqueous solvent,
wherein the main dispersant comprises a hydrogenated nitrile-based copolymer having a weight average molecular weight of 5,000 to 100,000, and
wherein the auxiliary dispersant comprises a compound containing methylcellulose as a main chain.

2. The conductive material dispersion of claim 1, wherein the hydrogenated nitrile-based copolymer is hydrogenated nitrile butadiene rubber.

3. The conductive material dispersion of claim 1, wherein the hydrogenated nitrile-based copolymer comprises an α, β-unsaturated nitrile-derived structure unit in an amount of 20 wt% to 50 wt% in the hydrogenated nitrile-based copolymer.

4. The conductive material dispersion of claim 1, wherein the conductive material dispersion comprises the hydrogenated nitrile-based copolymer in an amount of 5 parts by weight to 40 parts by weight with respect to 100 parts by weight of the carbon-based conductive material.

5. The conductive material dispersion of claim 1, wherein the compound containing methyl cellulose as a main chain comprises at least one selected from the group consisting of carboxy methyl cellulose, ethyl methyl cellulose, hydroxypropyl cellulose, and hydroxy ethyl cellulose.

6. The conductive material dispersion of claim 1, wherein the conductive material dispersion comprises the compound containing methylcellulose as a main chain in an amount of 5 parts by weight to 40 parts by weight with respect to 100 parts by weight of the carbon-based conductive material.

7. The conductive material dispersion of claim 1, wherein a weight ratio of the main dispersant and the auxiliary dispersant is 40:60 to 90:10.

8. The conductive material dispersion of claim 1, wherein a total amount of the main dispersant and the auxiliary dispersant is 5 parts by weight to 500 parts by weight with respect to 100 parts by weight of the carbon-based conductive material.

9. The conductive material dispersion of claim 1, wherein the carbon-based conductive material comprises a carbon nanotube.

10. The conductive material dispersion of claim 9, wherein the carbon nanotube is a multi-walled carbon nanotube.

11. The conductive material dispersion of claim 1, wherein the conductive material dispersion is a conductive material dispersion adapted for forming a positive electrode.

12. An electrode comprising an electrode active material layer formed from an electrode slurry composition,
wherein the electrode slurry composition comprises an electrode active material, the conductive material dispersion of claim 1, a binder, and a solvent.

13. The electrode of claim 12, wherein the electrode is a positive electrode.

14. A lithium secondary battery comprising a positive electrode,
wherein the positive electrode is the electrode of claim 13.
